# EUROPEAN PATENT SPECIFICATION

(11) **EP 0 336 063 B1**
(45) Date of publication and mention of the grant of the patent: **06.04.1994**
(21) Application number: 89101576.0
(22) Date of filing: 30.01.1989
(51) Int. Cl.: B65G 47/84

(54) **Container conveying mechanism**
Behälter-Fördermechanismus
Mécanisme de transport pour des récipients

(30) Priority: 04.04.1988 JP 45564/88 U
(43) Date of publication of application: 11.10.1989
(73) Proprietor: MITSUBISHI JUKOGYO KABUSHIKI KAISHA, Tokyo 100 (JP)
(72) Inventor: Takagi, Koichi Nagoya Machinery Works Mitsubishi, Nakamura-ku Nagoya-shi Aichi-ken (JP); Shimizu, Teruo Nagoya Machinery Works Mitsubishi, Nakamura-ku Nagoya-shi Aichi-ken (JP); Tashiro, Katsunori Can Development Center, Oyama-cho Sungo-gun Shizuoka-ken (JP); Takahashi, Hideo Can Development Center, Oyama-cho Sungo-gun Shizuoka-ken (JP)
(74) Representative: Henkel, Feiler, Hänzel & Partner

(56) References cited:
- DE-A- 3 436 089
- FR-A- 1 074 662
- FR-A- 2 576 003
- US-A- 1 383 402

## Description

### BACKGROUND OF THE INVENTION:

### Field of the Invention:

The present invention relates to a conveyor means for canned or bottled containers whereby said conveyor means comprises a star wheel.

### Description of the Prior Art:

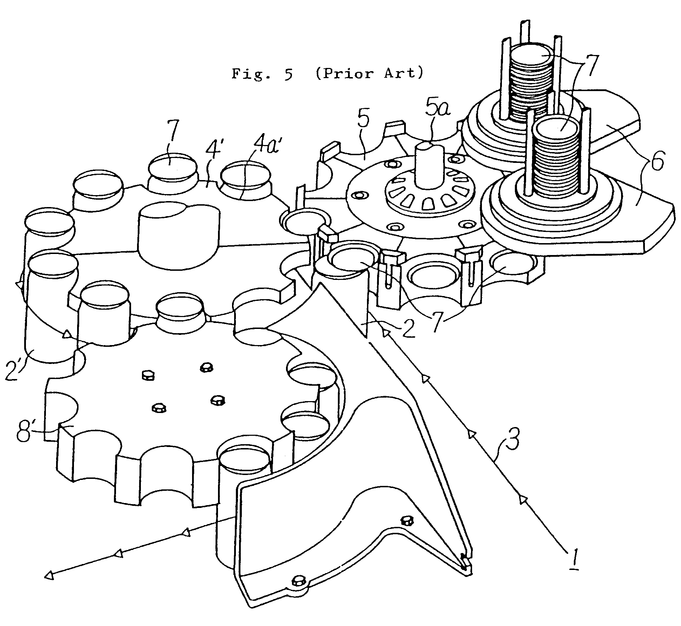

By way of example, the prior art relating to a star wheel in a can seamer will be described here. Explaining now one example of a star wheel for guiding can drums in a heretofore known seamer with reference to Fig. 5, cans 2 filled with liquid in a filler 1 are fed into a seaming star wheel 4' as conveyed by a can feed conveyor 3. Reference numeral 5 designates a can lid feed star wheel disposed adjacent to the seaming star wheel 4', on the outer circumference of this star wheel 5 are formed guide grooves 5a which are similar to guide grooves 4a' for the cans 2 provided on the outer circumference of the seaming star wheel 4', can lids 7 are dropped into these guide grooves 5a from a can lid feed mechanism 6 above, and the dropped lid 7 is fed onto the can 2 that is about to be fed to the seaming star wheel 4' as conveyed by the can feed conveyor 3. Thereafter, the can 2 and the lid 7 fed into the seaming star wheel 4' are subjected to crimping work, and the thus completed packaged can 2' is sent to the subsequent step of the process via an outlet star wheel 8′.

However, the guide grooves 4a′ of the seaming star wheel 4′ has a semicircular cross-section shape as shown in Fig. 6, and hence when the packaging can 2 has been conveyed from the left to the right as viewed in Fig. 6 by means of a feed chain conveyor 15 and is delivered to the star wheel 4′, there occurs a backlash before the packaging can 2b comes into contact with an end corner C of the star wheel guide groove 4a′ as shown at 2b′.

Since the can 2 having been fillled with liquid by a filler 1 in Fig. 5 and being conveyed by the can feed conveyor 3, has not yet a can lid placed thereon, and moreover since the can 2 is being conveyed at a considerably high speed, liquid spill would arise on the can feed conveyor 3, and especially at the inlet of the seaming star wheel 4′ where the can lid 7 is being fed, under the condition where the can lid 7 has not yet perfectly placed on the can 2 and the can 2 begins to rotate as a result of transfer of the can 2 onto a lifter not shown, and therefore, liquid spill at this location especially becomes an issue. In this connection, in the case of the star wheel in the prior art, since the teeth forming the guide grooves 4a′ extend only up to the pitch circle, guide for the can is effective only at the end corner C where the can has reached the pitch circle of the star wheel 4', hence guide for the front side of the can is not present until the can reaches the pitch circle but the can is placed under an unstable condition, and therefore, liquid spill is further promoted.

Another prior art conveying mechanism comprising the features of the preamble of claim 1 is described in FR-A-2 576 003. This known mechanism is directed to distribute containers at a switchable junction of conveying paths. Like in the invention, star wheels for guiding the containers on a circular path are employed, the shape of the teeth of these star wheels comprises cycloid portions and is designed to achieve a smooth transition of the containers at the switchable junction.

US-A-1 383 402 relates to improvements in the meshing of a roller chain with a sprocket and discloses a cycloid tooth shape of the sprocket as a solution to smoothening the meshing.

### SUMMARY OF THE INVENTION:

It is therefore one object of the present invention to provide a container conveying mechanism comprising a star wheel having an improved tooth that is free from the disadvantage of the star wheel in the prior art.

A more specific object of the present invention is to provide a container conveying mechanism comprising a container guide star wheel which can firmly constrain a packaging can being conveyed without any backlash when it is delivered from a feed chain conveyor to the container guide star wheel.

According to the present invention, there is provided a container conveying mechanism with the features of claim 1.

According to the present invention, owing to the above-featured configuration of the star wheel, when a packaging can being conveyed by a feed chain conveyor is delivered to the star wheel, the can can be guided by the cycloid tooth-shaped extension at the tip end of the tooth of the star wheel before the can is fitted in the groove between the teeth of the star wheel, and so, the can can be conveyed stably without any backlash.

The above-mentioned and other objects, features and advantages of the present invention will become more apparent by reference to the following description of preferred embodiments of the invention taken in conjunction with the accompanying drawings.

### BRIEF DESCRIPTION OF THE DRAWINGS:

In the accompanying drawings:
Fig. 1 is a plan view of a can filling machine and a can lid seamer employing a star wheel according to one preferred embodiment of the present invention;
Fig. 2 is a front view of the same;
Fig. 3 is a perspective view showing a modified embodiment of the star wheel according to the present invention;
Figs. 4(a) to 4(d) are schematic plan views showing the successive steps in the process of feeding packaging cans by making use of the star wheel according to the present invention;
Fig. 5 is a perspective view showing star wheels in the prior art; and
Fig. 6 is a schematic plan view showing the step of delivering a packaging can from a feed chain conveyor to a can guide star wheel in the prior art.

### DESCRIPTION OF THE PREFERRED EMBODIMENTS:

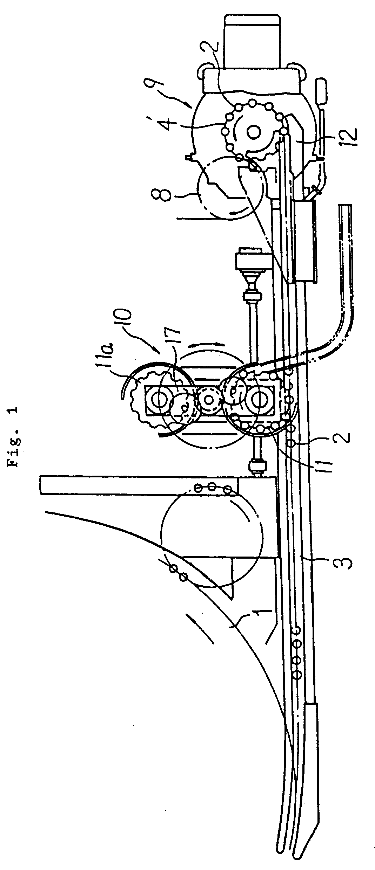

Now the present invention will be described in greater detail in connection to the preferred embodiment illustrated in Figs. 1 to 4. In these figures, reference numeral 1 designates a filler, numeral 2 designates cans, numeral 3 designates a can feed conveyor, numeral 4 designates a seaming star wheel in a seamer, numeral 8 designates an outlet star wheel, and numeral 12 designates an inlet guide. It is to be noted that in the embodiment shown in Fig. 1, two can drum guide wheels 11 and 11a are provided on a turret mechanism so as to be used alternatively as switched in position. Also in the embodiment shown in Fig. 1, a can lid feeder device 10 is disposed in the midway of the can feed conveyor 3 between a filler 1 not shown and a seamer 9.

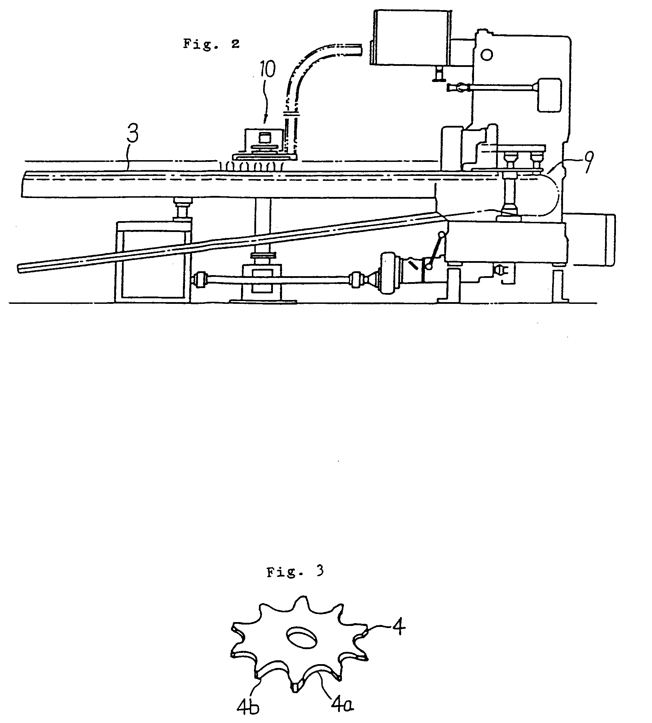

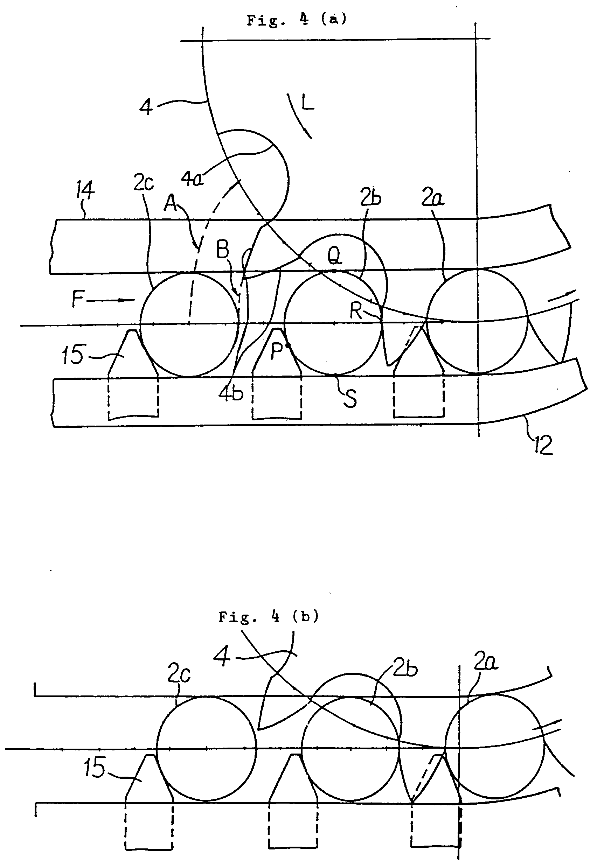

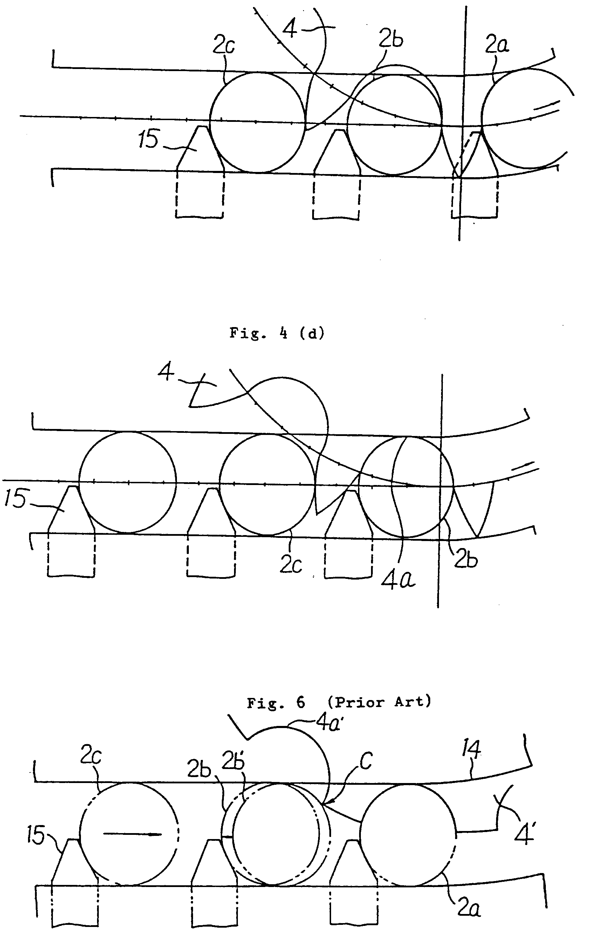

Explaining now with respect to the can drum guide star wheel 4 as one example of the star wheel according to the present invention, as best seen in the perspective view in Fig. 3, the tip end portions of teeth forming pockets therebetween are extended to the outside of a pitch circle, and the contours of the extended portions 4b have a cycloid tooth shape. In more particular, the configuration of the extended portions of the teeth and the mode of operation of the star wheel is shown in Figs. 4(a) to 4(d). Fig. 4(a) shows the state where packaging can are being conveyed by a feed chain conveyor 15 in the direction of arrow F and are successively delivered to guide slots (pockets) 4a of a star wheel 4 that is rotating in the direction of arrow L as synchronized with the feed chain conveyor 15, and Figs. 4(b) to 4(c) show the successive steps in the process of packaging cans 2a, 2b, 2c, ..... being sequentially conveyed.

Referring now to Fig. 4(a), a locus of the center of the can 2 relative to the star wheel 4 when the packaging can 2 comes into a guide groove 4a is the cycloid curve A depicted by a dash line, and hence the extended portion of the tooth of the star wheel 4 is formed so as to have the contour shown by a dash line B to be shaped into a cycloid tooth. Although this configuration of the cycloid tooth has a sharpened shape, the tip end portion of each tooth could be cut at an appropriate length, and further it could be rounded as shown in Fig. 3.

Subsequently, the packaging can 2 is conveyed rightwards by the feed chain conveyor 15, and when it has come to the position 2b shown in Figs. 4(a) and 4(b), the packaging can 2 is constrained in position by guide members 12 and 14, the star wheel 4 and the feed chain conveyor 15 at points P and R with respect to the back and forth directions and at points Q and S with respect to the left and right directions. While the packaging can 2 is being constrained in the above-mentioned condition, the packaging can is charged into the guide groove 4a of the star wheel 4 under a stable condition as shown at 2b in Fig. 4(d) through the intermediate state 2b shown in Fig. 4(c).

Since the star wheel according to the present invention is constructed as described in detail above, when containers are fed into the guide grooves (pockets) of the star wheel as conveyed by a feed chain conveyor, the container is conveyed with its backlash in the back and forth directions restrained under the condition of being held in contact with the extended tooth surface of the star wheel and the surfaces of the guide members over a predetermined interval before entering the guide groove, and therefore, a container filled with liquid would scarcely produce liquid spill.

## Claims

1. A container conveying mechanism comprising
means (3) for conveying containers (2) along a linear path, and
guiding means for receiving/delivering said containers (2) from/to the conveying means (3) and guiding said containers (2) on a circular path, said guiding means comprising a rotatably driven star wheel (4) with a plurality of teeth, said teeth having tooth portions (4b) formed in a symmetrical cycloid tooth shape, and guide grooves (4a) formed between the teeth for receiving the containers (2),
characterized in that
said cycloid tooth portions (4b) extend radially outwards from a pitch circle of said star wheel (4), and said guide grooves (4a) extend radially inwards from the pitch circle and substantially conform to the shape of half the cross-section of a container (2).

2. A container conveying mechanism as claimed in claim 1, characterized in that the tip end of said cycloid tooth shape is cut and rounded.

## Patentansprüche

1. Behälter-Fördermechanismus, umfassend:
eine Einrichtung (3) zum Fördern von Behältern (2) längs einer geradlinigen Strecke und
eine Führungseinrichtung zum Aufnehmen/Abgeben der Behälter (2) von der/an die Fördereinrichtung (3) und zum Führen der Behälter (2) auf einer kreisförmigen Strecke, wobei die Führungseinrichtung ein für Drehung angetriebenes Sternrad (4) mit einer Anzahl von Zähnen aufweist, welche Zähne mit einer symmetrischen Zykloidzahnform ausgebildete Zahnabschnitte (4b) und zwischen den Zähnen gebildete Führungsausnehmungen (4a) zum Aufnehmen der Behälter (2) aufweisen,
dadurch gekennzeichnet, daß
die Zykloidzahnabschnitte (4b) von einem Zahnteilkreis des Sternrads (4) radial nach außen verlaufen und die Führungsausnehmungen (4a) vom Zahnteilkreis radial nach innen verlaufen und im wesentlichen der Form der Hälfte des Querschnitts eines Behälters (2) angepaßt sind.

2. Behälter-Fördermechanismus nach Anspruch 1, dadurch gekennzeichnet, daß das Spitzenende der Zykloidzahnform (ab)geschnitten und abgerundet ist.

## Revendications

1. Mécanisme de transport de récipients comprenant :
des moyens (3) pour transporter des récipients (2) selon un trajet linéaire, et
des moyens de guidage pour recevoir/débiter lesdits récipients (2) des/aux moyens de transport (3) et guider lesdits récipients (2) selon une trajectoire circulaire, lesdits moyens de guidage comprenant une roue étoile (4) entraînée en rotation et possédant une pluralité de dents, lesdites dents ayant des portions (4b) de dents formées avec une forme de dent en cycloïde symétrique, et des encoches de guidage (4a) formées entre les dents pour recevoir les récipients (2),
caractérisé en ce que
lesdites portions de dents (4b) en cycloïde s'étendent radialement a l'extérieur d'un cercle primitif de ladite roue étoile (4) et lesdites encoches de guidage (4a) s'étendent radialement à l'intérieur du cercle primitif et épousent sensiblement la forme de la moitié de la section d'un récipient (2).

2. Mécanisme de transport de récipients selon la revendication 1, caractérisé en ce que l'extrémité de pointe de ladite forme de dent en cycloïde est coupée et arrondie.
